# EUROPEAN PATENT APPLICATION

(11) **EP 4 715 653 A1**
(43) Date of publication of application: **25.03.2026**
(21) Application number: 24383002.3
(22) Date of filing: 19.09.2024
(51) Int. Cl.: G06F 21/79, G06F 12/14

(54) **SECURE ELEMENT WITH DYNAMIC MAP TREE RESIZE**

(71) Applicant: Giesecke+Devrient Mobile Security Germany GmbH, 81677 München (DE)
(72) Inventor: PUJAZON, Daniel, 08820 El Prat de Llobregat (Barcelona) (ES); CONDE, Davide, 08820 El Prat de Llobregat (Barcelona) (ES); BENACH, Marcel, 08820 El Prat de Llobregat (Barcelona) (ES); RAVENTÓS, Aleix, 08820 El Prat de Llobregat (Barcelona) (ES)
(74) Representative: LKGLOBAL Partnerschaftsgesellschaft mbB

(57) **Abstract**

A secure element (100) includes a processor (110) and a memory (120). The memory stores data and instructions for being executed by the processor (110). The memory (120) is divided into a first memory section (121) for code and non-volatile data and a second memory section (122) for volatile data. The processor (110) executes an operating system (115). The operating system (115) implements a memory manager (130) with a map tree (140). The memory manager (130) dynamically allocates a physical address (129) of the first memory section (121) of the memory (120) to a virtual address (128) in the map tree (140).

## Description

### Technical Field

The invention relates to secure elements. In particular, the invention relates to a secure element which enables dynamically allocating a physical address to a virtual address.

### Background

A secure element, SE, is a tamper resistant element, TRE, that provides a secure memory and execution environment within a smart card/device in which application code and application data can be securely stored and administered. The secure element ensures that access to the data stored on the card is provided only when authorized.

As a non-limiting example, secure elements may be used in payment cards or mobile devices. In telecommunication products, e.g., mobile devices, the secure element is configured to store one or more electronic subscriber profiles, in particular (electronic) subscriber identification module ((e)SIM) profiles, that may allow mobile devices to connect to one or more mobile networks. A subscriber profile (e.g., (e)SIM profile) may be generated by a mobile network operator (MNO) and may be downloaded to a mobile network device. The subscriber profile may then be installed on the secure element of the mobile device and used for communication over a corresponding mobile network by the mobile device.

Historically, a secure element's software does not vary once it has surpassed the production phase. This means that if any problem is found that is related to the software within it (new attacks or vulnerabilities, new updates on sec-tor specification, the expected life cycle of the devices using it), the only possible action is to change the whole secure element. This makes it particularly difficult to keep up to date with the market needs in terms of production (with software updates after production being impossible), especially when the production is bound to be executed within a certified environment in the factory.

Recently, remote provisioning capabilities for supporting operating system updates onto secure elements during field deployment have been put forward. However, as a result of such updates, the size of the operating system, in particular the space required in a memory of the secure element, may vary. This may have an impact on the usable memory for storing read/write data modified during runtime of a secure element.

In particular, when the size of the static code of an updated operating system is smaller than the size of the static code prior to the update, it may be cumbersome to access the released memory for read/write operations during runtime after the update process.

### Description of the invention

There may exist a need for more efficiently using the memory of a secure element.

This need is addressed by the invention as described in the following.

According to an aspect of the invention, a secure element comprises a processor and a memory. The memory is configured to store data and instructions for being executed by the processor. The memory is divided into a first memory section for code and non-volatile data and a second memory section for volatile data. The processor is configured to execute an operating system. The operating system implements a memory manager with a map tree. The memory manager is configured for dynamically allocating a physical address of the first memory section of the memory to a virtual address in the map tree.

For example, the first memory section is a flash memory, and the second memory section is a RAM (random access memory). Typically, the first memory section (e.g., the flash memory) includes multiple portions of memory, for example a first portion, a second portion, and a third portion. In particular, the first portion includes code of an operating system, the second portion contains space for read/write data, and the third portion contains space for read only data.

According to the present approach, the memory manager is capable of dynamically allocating the physical addresses of the first memory section to virtual addresses in the map tree. This approach is beneficial because released memory space in the first memory section can thus be used and the virtual addresses in the map tree are not hard-wired to the physical addresses of the initial second portion (read/write data). For example, when the operating system is updated and the updated version of the OS requires less space in the memory, the size of the first portion is less than prior to the OS update. Using the space released by the OS update is enabled by the approach described herein. The memory manager is able to dynamically resize the map tree (e.g., add virtual addresses) and assign the newly added virtual addresses to released physical memory.

According to an embodiment of the invention, the first memory section includes a first portion for storing a static code, a second portion for storing read/write data, and a third portion for storing read only data. The memory manager is configured to resize the map tree when one of the first portion or the third portion is resized and physical memory is released for being used as part of the second portion.

For example, the static code stored in the first portion is an operating system code of the secure element, the read/write data in the second portion are data expected to be read and modified during runtime of the secure element, and the read only data are data expected to be constant during runtime of the secure element.

In case of an update of the operating system, and when the update requires less space in the memory, memory pages of the physical memory are released. These released memory pages can be used as part of the second portion for storing read/write data. However, in order to be able to use the released memory pages of the physical memory, the map tree needs to be updated to include additional virtual addresses that point to the released memory pages of the physical memory.

According to another embodiment of the invention, the map tree is configured to be extendable to include additional virtual addresses assigned to physical addresses of the first memory section.

The virtual addresses of the map tree need to be stored in the memory. In order to be able to resize the map tree, the address space of the virtual addresses needs to be sufficient for addressing more physical memory space than initially used for the second portion of the first memory section. Therefore, even if the initial map tree of the secure element does not need the entire address space, it may be designed such that the address space can be extended.

According to another embodiment of the invention, the map tree is a multilevel map tree with a root node, a first intermediate level with at least one node, and a leaf-level with at least one leaf including a virtual address pointing to a physical address.

The map tree starts at the root node. The root node points to nodes of a (first) intermediate level. Depending on the size of the address space, the nodes of the first intermediate level point to nodes of a second intermediate level. The lowest level in the multilevel map tree are the leaves which point to a physical address.

The root node points to the node(s) of the intermediate level, and each node at the intermediate level points to one or more leaves. Thus, a virtual address includes the root, the index of the node of the intermediate level, optionally the index of the node at the next intermediate level, and the index of the leaf. This allows resolving physical addresses by pointing to a virtual address in the map tree.

According to another embodiment of the invention, the memory manager is configured to add an additional leaf at the leaf-level, and to assign the additional leaf to a node of the first intermediate level.

When physical memory is released and the nodes of the first intermediate level have free space for an additional leaf, this additional leaf is added to one node of the first intermediate level and the additional level is associated with an address of the physical memory.

According to another embodiment of the invention, the memory manager is configured to add an additional node at the first intermediate level, and to assign the additional node at least one leaf.

When no additional leaf can be added because the nodes at the first (or any further) intermediate level do not have space for an additional leaf, an additional node at said intermediate level is added so that further leaves can be added to this additional node.

According to another embodiment of the invention, the memory manager is configured to add a second intermediate level to the map tree.

By adding another intermediate level to the map tree, the available virtual address space can be even more increased because the depth of the map tree is increased. The nodes of the existing intermediate level are linked to the nodes of the added intermediate level. Thereby, the map tree has got one more level, i.e., its depth has increased by one level.

According to another embodiment of the invention, the memory manager is configured to add at least two nodes to the second intermediate level, to link the nodes of the first intermediate level with one node of the second intermediate level, and to add another first intermediate level node which is linked to the other node of the second intermediate level.

According to another embodiment of the invention, the memory manager is configured to add another leaf and assign this another leaf to the another first intermediate level node which is linked to the other node of the second intermediate level.

According to another embodiment of the invention, the memory manager is configured to delete at least one leaf and/or at least one node of the first intermediate level.

Of course, the map tree may not only be extended, but it may also be reduced to delete virtual addresses that point to physical addresses that are not free to use anymore, e.g., when an update of the static code of the operating system requires more space in the memory than the previous version of the operating system.

Additional features of the invention can be derived from the claims, the drawings, and the description of the drawings.

### Brief description of the drawings

Embodiments of the invention are described hereinafter with reference to the drawings.

It is shown in:
- Fig. 1: a schematic representation of a secure element in accordance with an exemplary embodiment;
- Fig. 2: a schematic representation of a memory of a secure element in accordance with an exemplary embodiment;
- Fig. 3: a schematic representation of a portion of a memory of a secure element in accordance with an exemplary embodiment;
- Fig. 4: a schematic representation of an operating system with a memory manager of a secure element in accordance with an exemplary embodiment;
- Fig. 5: a schematic representation of the structure of a virtual address and associating the virtual address to a physical address;
- Fig. 6: a schematic representation of possible modifications in a memory of a secure element after an update of the static code;
- Fig. 7: a schematic representation of resizing a map tree in accordance with an exemplary embodiment;
- Fig. 8: a schematic representation of resizing a map tree in accordance with an exemplary embodiment;
- Fig. 9: a schematic representation of resizing a map tree in accordance with an exemplary embodiment;

### Detailed description of exemplary embodiments

In the drawings, same or similar elements are referred to by same reference signs.

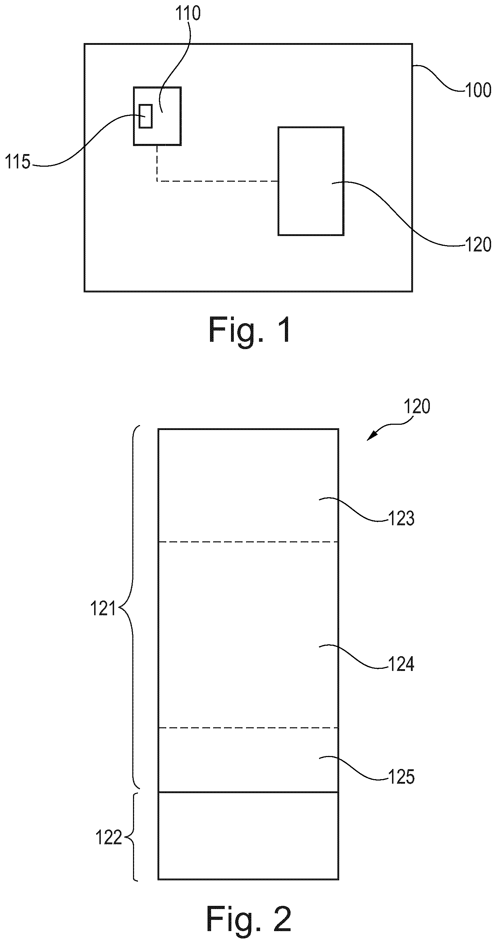

Fig. 1 shows a schematic representation of a secure element (SE) 100. The SE includes a processor 110 and a memory 120. The processor 110 may execute an operating system (OS) 115 based on instructions, i.e., code, and data stored in the memory 120. The SE 100 may be a payment card, a SIM, or any other tamper resistant element. A tamper resistant element typically has limited resources like computational power, amount of memory, etc. Therefore, efficient use of these resources is of utmost importance.

As shown in Fig. 2, the memory 120 is divided into different memory sections and memory portions. The memory 120 includes a first memory section 121 and a second memory section 122. The first memory section 121 includes, e.g., a flash for code and non-volatile data. The second memory section 122 includes a random access memory for storing volatile data.

Furthermore, the first memory section 121 is divided into several memory portions. In the example shown in Fig. 2, the first memory section 121 includes a first memory portion 123, a second memory portion 124, and a third memory portion 125. The first memory portion 123 includes static code like an operating system code. The second memory portion 124 is configured to store read/write data expected to be read and modified during runtime. The third memory portion 125 stores read only data expected to be constant during runtime.

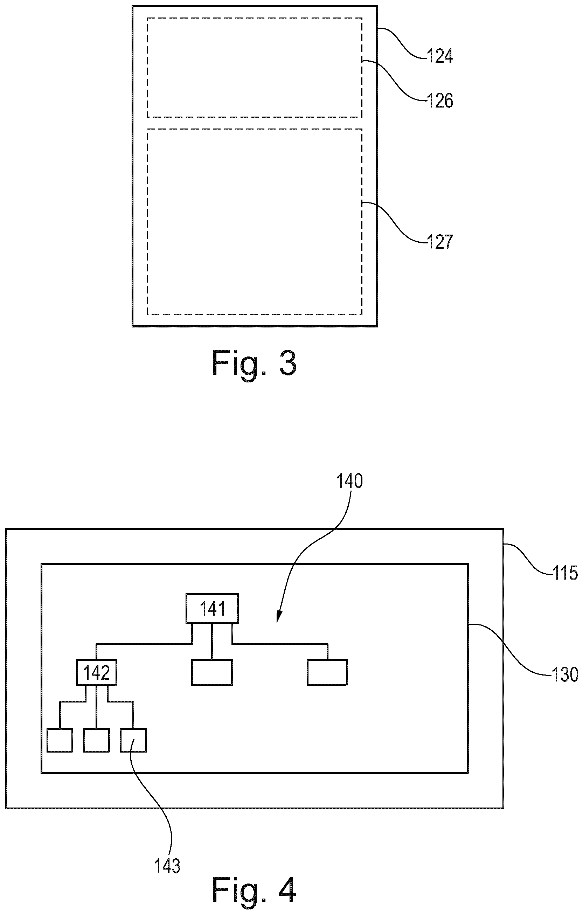

Fig. 3 shows a representation of the second memory portion 124. To handle the data in the second memory portion (read/write data), the OS 115 implements a memory manager that allows dynamic allocation of data through memory virtualization. The second memory portion 124 includes a virtual memory section 126 and a physical memory section 127. The virtual memory section is a subset of the physical memory which comprises the entire read/write data memory portion 124.

Fig. 4 shows a schematic representation of the memory management by using a map tree. The OS 115 implements a memory manager 130, and the memory manager 130 uses a map tree 140 for linking physical addresses to virtual addresses. The map tree 140 includes a root node 141, multiple n-level nodes 142, and multiple leaves 143 at the lowest level of the map tree. While the map tree 140 is shown with three levels (root level 141, intermediate level 142, leaves 143), it should be understood that the depth (i.e., the number of levels) of the map tree 140 may be higher than that one shown in Fig. 4. In such a case, an additional intermediate level is added, as will be described below. The nodes of a subordinate level are assigned to one respective node of the superior level. Thus, by pointing to the root node, one particular n-level-node, optionally one particular n+1-level node, and one leaf, a physical address is resolved, which is stored in the leaf. Furthermore, while Fig. 4 shows that each superior node includes three indexes to three nodes of the subordinate level, this implementation detail may also vary, and one node may include four or more indexes to nodes of the subordinate level.

For example, the read/write data in the second memory portion 124 is constantly being tracked and reallocated inside the region by the memory manager 130. The memory manager 130 tracks the current position of all the data using a multilevel map tree 140, where only knowing the location of the root node, a virtual address can be resolved into a physical address in the memory.

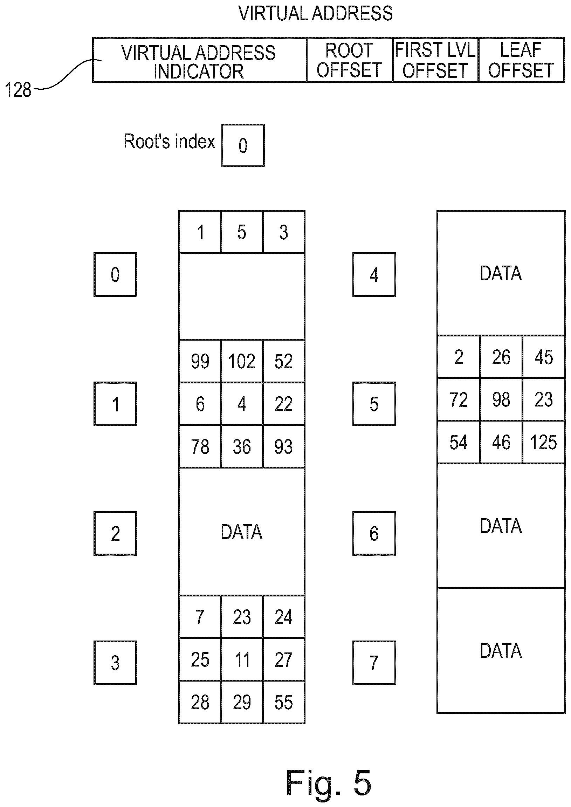

Fig. 5 shows an exemplary implementation of the virtual address space. One virtual address 128 includes a virtual address indicator, a root offset, a first level offset, and a leaf offset. The virtual address space is divided in pages and each page is indexed by a number in ascending order. The virtual address indicates the offset of the page for each level of the map, for that specific address. In the example shown, the root index is "0", in the first level, the pages with the indexes "1", "3", and "5" are used. Each page on the first level includes pointers to pages in the physical memory.

In the example show, when data from physical memory page "7" needs to be accessed (read or write), one would have to go to the root node (0), select page "3" from the first level, and access the first entry ("7") from page "3". It is noted that in the example shown in Fig. 5, the nodes on the first level (pages 1, 3, 5) each include 9 indexes, i.e., pointers to physical memory addresses.

Fig. 5 shows that there are multiple pages for the first level nodes, e.g. pages "1" to "7", and these pages are indexed in page "0". Three level 1 nodes are associated with physical memory addresses. When more physical memory needs to be associated to a virtual address, either an additional entry is made in one of the first level nodes 1, 3, 5, or, when these nodes are full, an additional first level node is added in the root node and in this additional first level node, one or more indexes to physical memory addresses are created.

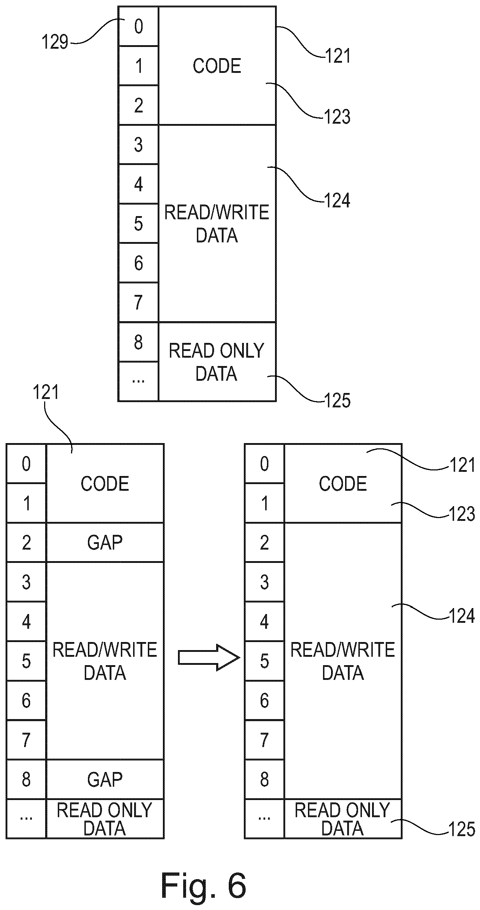

Fig. 6 shows the structure of the first memory section 121 with exemplary physical address pages 129 having the page index "0" to "8" and ongoing. Static code of the operating system is stored in pages "0" to "2" in the first memory portion 123. Pages "3" to "7" include read/write data in the second memory portion 124. Read only data are contained in page "8" and ongoing in the third memory portion 125.

At runtime, there can be situations, for example after an OS update, where the OS code and data takes fewer memory space than before, as shown in in the bottom-left schematic representation of the first memory section 121: when the OS code takes only two pages ("0", "1") instead of three ("0", "1", "2"), and the third memory portion is also relocated, gaps are left between the first memory portion, the second memory portion, and the third memory portion, see pages "2" and "8". If the memory manager cannot be resized, those new formed gaps might be left unused for the remaining lifetime of the system. With the resizable map tree as described herein, the gaps can be used and the entire physical size of the second memory portion 124 is usable because virtual addresses are provided to associate the gaps in the memory to new virtual addresses.

The memory manager is configured such that it can resize the map tree up to a dimension to cover the entire first memory section 121. In the example of Fig. 6 on the top, the memory manager would initially work with pages from indexes "3" to "7", as this memory area is assigned to the read/write data memory portion 124. In case of an OS update, when the static code of the OS requires less (or more) space and the size of the second memory portion 124 changes, the map tree needs to be updated. In the example of Fig. 6, the map tree works with pages "2" to "8" after the update of the OS and the resize of the map tree. The size of the index needs to be adapted to the maximum size of the second memory portion to have enough indexes for associating physical addresses to virtual addresses.

Rearranging the code in the first memory section 121 requires updating the map tree. Different approaches for updating the map tree are described.

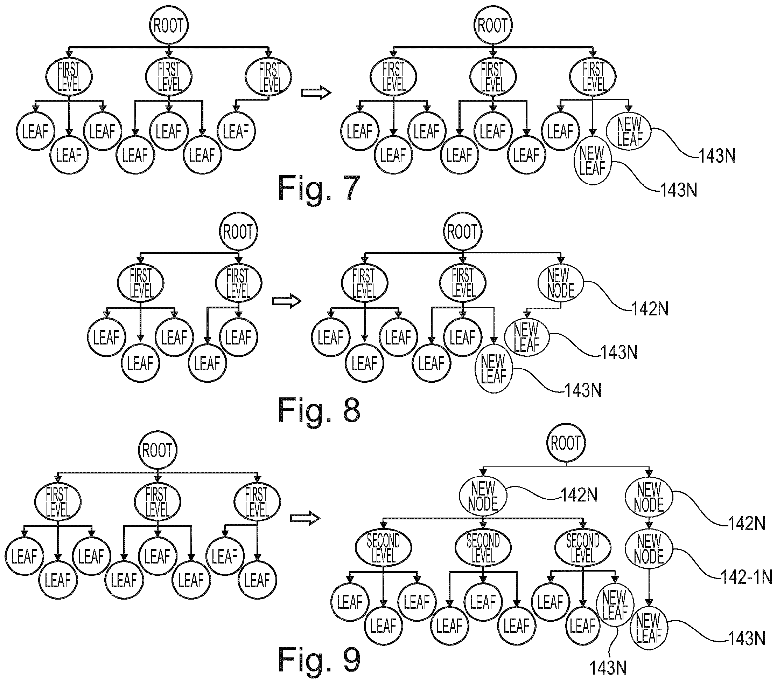

Fig. 7 shows an updating of the map tree by adding leaves to existing first level nodes. On the left of Fig. 7, the map tree has one root node, three first level nodes, and seven leaves. With the assumption that each first level nodes may index three leaves, there is additional space for two more leaves 143N. This may be referred to as a first scenario, in which the map tree has enough space for additional indexes and additional leaves are added to the map tree.

Fig. 8 shows an updating of the map tree by adding one more node to the first level and adding two leaves to the map tree, one leaf to an existing first level node and another leaf to the newly added first level node. In the initial state of Fig. 8, the map tree has two first level nodes and five leaves. When two more leaves need to be added, this requires one more node at the first level, and one leaf 143N is added to the second node while another leaf 143N is added to the newly added third node 142N of the first level. This may be referred to as a second scenario, in which the newly required indexes can be addressed in the current map tree depth. The depth of the map tree does not need to be amended, because there can be added an additional first level node.

Fig. 9 shows an updating of the map tree by adding an additional level to the map tree. On the left, the map tree has a root node, three first level nodes, and eight leaves. Assuming that two more leaves need to be added, this cannot be done with the current depth of the map tree and the precondition that each node (root node and first level nodes) includes three indexes to other nodes/leaves.

Thus, the map tree is resized to include an additional level. Two nodes 142N establish the newly added level while the existing nodes are moved one level below the newly added level.

One leaf is added to the previously existing branch of the map tree and the second leaf is added to the second node 142N, which has a new node 142-1N on the subordinate level and can hold the new leaf.

When the map tree needs to be reduced, removing leaves, nodes and depth levels of the map tree is done by inverting the process of adding leaves.

### List of reference signs

- 100: secure element, SE
- 110: processor
- 115: operating system, OS
- 120: memory
- 121: first memory section, flash, for code and non-volatile data
- 122: second memory section, RAM, for volatile data
- 123: first portion, operating system code
- 124: second portion, read/write data
- 125: third portion, read only data
- 126: virtual memory
- 127: physical memory
- 128: virtual address
- 129: physical address
- 130: memory manager
- 140: map tree
- 141: root
- 142: n-level
- 143: leaf

## Claims

1. A secure element (100, SE), the SE (100) comprising:
a processor (110);
a memory (120), configured to store data and instructions for being executed by the processor (110);
wherein the memory (120) is divided into a first memory section (121) for code and non-volatile data and a second memory section (122) for volatile data;
wherein the processor (110) is configured to execute an operating system (115, OS);
wherein the operating system (115) implements a memory manager (130) with a map tree (140);
wherein the memory manager (130) is configured for dynamically allocating a physical address (129) of the first memory section (121) of the memory (120) to a virtual address (128) in the map tree (140).

2. The secure element (100) of claim 1,
wherein the first memory section (121) includes a first portion (123) for storing a static code, a second portion (124) for storing read/write data, and a third portion (125) for storing read only data;
wherein the memory manager (130) is configured to resize the map tree (140) when one of the first portion (123) or the third portion (125) is resized and physical memory is released for being used as part of the second portion (124).

3. The secure element (100) of claim 1 or 2,
wherein the map tree (140) is configured to be extendable to include additional virtual addresses assigned to physical addresses of the first memory section (121).

4. The secure element (100) of any one of the preceding claims,
wherein the map tree (140) is a multilevel map tree with a root node, a first intermediate level with at least one node, and a leaf-level with at least one leaf including a virtual address pointing to a physical address.

5. The secure element (100) of claim 4,
wherein the memory manager (130) is configured to add an additional leaf at the leaf-level, and to assign the additional leaf to a node of the first intermediate level.

6. The secure element (100) of claim 4 or 5,
wherein the memory manager (130) is configured to add an additional node at the first intermediate level, and to assign the additional node at least one leaf.

7. The secure element (100) of any one of claims 4 to 6,
wherein the memory manager (130) is configured to add a second intermediate level to the map tree (140).

8. The secure element (100) of claim 7,
wherein the memory manager (130) is configured to add at least two nodes to the second intermediate level, to link the nodes of the first intermediate level with one node of the second intermediate level, and to add another first intermediate level node which is linked to the other node of the second intermediate level.

9. The secure element (100) of claim 8,
wherein the memory manager (130) is configured to add another leaf and assign this another leaf to the another first intermediate level node which is linked to the other node of the second intermediate level.

10. The secure element (100) of any one of claims 4 to 9,
wherein the memory manager (130) is configured to delete at least one leaf and/or at least one node of the first intermediate level.
